# DEMANDE DE BREVET EUROPEEN

(11) **EP 1 383 296 A1**
(43) Date de publication de la demande: **21.01.2004**
(21) Numéro de dépôt: 03015744.0
(22) Date de dépôt: 10.07.2003
(51) Int. Cl.: H04L 29/12

(54) **Système de communication de données entre au moins deux utilisateurs munis chacun d'un appareil téléphonique et d'un dispositif de traitement de données**

(30) Priorité: 15.07.2002 FR 0208933
(71) Demandeur: FRANCE TELECOM, 75015 Paris (FR)
(72) Inventeur: Bailleul, Nicolas, 14440 Douvres la Delivrande (FR); Viel Ronan, 14000 Caen (FR)

(57) **Abrégé**

L'invention concerne un procédé et un système de communication de données entre au moins deux utilisateurs munis chacun, d'une part, d'un appareil téléphonique (1a, 1b) relié à un réseau de télécommunications (2), et, d'autre part, d'un dispositif de traitement de données (4a, 4b) relié à un réseau de transmission de données (6). Au cours de ce procédé:
- l'un des utilisateurs compose sur son appareil téléphonique (1a) le numéro de téléphone de l'autre utilisateur, pour communication via le réseau de télécommunications (2),
- le dispositif de traitement de données (4a) de l'utilisateur qui a composé le numéro de téléphone envoie une requête d'indication d'activité de l'appareil téléphonique (1a) dudit utilisateur à un serveur (5), lequel est relié au réseau de transmission de données (6) et comprend des moyens d'enregistrement (16) d'informations relatives aux deux dispositifs de traitement de données,
- une fois que la communication téléphonique est établie et en fonction des informations relatives aux deux dispositifs de traitement de données, le serveur (5) met ces derniers en relation de telle sorte que au moins l'un des utilisateurs soit susceptible de déclencher une communication de données avec l'autre utilisateur par l'intermédiaire du réseau de transmission de données (6).

## Description

La présente invention concerne un procédé de communication de données entre au moins deux utilisateurs munis chacun, d'une part, d'un appareil téléphonique relié à un réseau de télécommunications, et, d'autre part, d'un dispositif de traitement de données relié à un réseau de transmission de données.

A l'heure actuelle, on connaît un procédé de communication de données dans lequel est utilisée une passerelle qui permet de coupler une communication téléphonique à la communication de données. De telles passerelles sont connues sous le nom de passerelles CTI.

Une telle passerelle permet, lors de la réception d'un appel téléphonique dans un centre d'appels, d'identifier le client appelant par son numéro de téléphone et d'afficher sur l'ordinateur d'un opérateur de ce centre d'appels une fiche de description du client appelant (nom, prénom, adresse, etc...). De telles données sont communiquées au centre d'appels par un serveur relié à ce dernier.

L'inconvénient d'un tel procédé réside dans le fait que, d'une part, il est complexe à mettre en oeuvre, et que, d'autre part, la communication entre le client et le centre d'appels est toujours du type téléphonique. Il n'y a pas d'échange de données entre le client et le centre d'appel par l'intermédiaire d'un réseau de transmission de données.

On connaît également un procédé de communication de données selon lequel :
- un internaute télécharge sur son ordinateur personnel une page Web contenant un lien appelé "click-to-talk",
- l'internaute clique sur ce lien, ce qui provoque l'envoi vers une passerelle IP/RTC d'une requête contenant, codé, le numéro de téléphone d'un correspondant que l'internaute souhaite joindre,
- la passerelle décode ce numéro de téléphone et envoie vers l'ordinateur personnel de l'internaute une requête destinée à un centre de contact Web (logiciel contenu dans l'ordinateur personnel de l'internaute),
- ce centre de contact Web provoque alors le lancement de l'appel vers la passerelle lP/RTC,
- la passerelle lP/RTC établit la suite de l'appel via le réseau RTC et assure l'interconnexion.

L'inconvénient d'un tel procédé réside dans le fait qu'il est relativement complexe puisque que la communication téléphonique est initiée à partir d'une communication de données via un réseau Internet.

Il convient par ailleurs de noter que compte tenu de la complexité et du coût des deux procédés de communication de données décrits ci-dessus, ces derniers sont utilisés uniquement dans le cadre de relations établies soit entre des clients et une entreprise, soit entre des employés au sein de leur entreprise.

La présente invention a notamment pour but de remédier à cet inconvénient.

A cet effet, le procédé selon l'invention est caractérisé en ce qu'il comprend au moins les étapes suivantes:
- l'un des utilisateurs compose sur son appareil téléphonique le numéro de téléphone de l'autre utilisateur, pour communication via le réseau de télécommunications,
- le dispositif de traitement de données de l'utilisateur qui a composé le numéro de téléphone envoie une requête d'indication d'activité de l'appareil téléphonique dudit utilisateur à un serveur, lequel est relié au réseau de transmission de données et comprend des moyens d'enregistrement d'informations relatives aux deux dispositifs de traitement de données,
- une fois que la communication téléphonique est établie et en fonction des informations relatives aux deux dispositifs de traitement de données qui sont contenues dans les moyens d'enregistrement, le serveur met en relation les deux dispositifs de traitement de données de telle sorte que au moins l'un des utilisateurs soit susceptible de déclencher une communication de données avec l'autre utilisateur par l'intermédiaire du réseau de transmission de données.

On dispose ainsi d'un procédé de communication plus simple que les procédés de communication de l'état de la technique, un tel procédé étant en outre susceptible d'être utilisé par des particuliers aussi bien que par des clients ou des employés au sein d'une entreprise.

Dans des modes de réalisation préférés du procédé selon l'invention, on a recours à l'une et/ou à l'autre des dispositions suivantes :
- les informations relatives au dispositif de traitement de données de l'autre utilisateur sont enregistrées préalablement à l'initiation de la communication téléphonique,
- lesdites informations comprennent, pour chaque dispositif de traitement, des données d'identification, d'accès, et de capacités de communication, via le réseau de transmission de données,
- la mise en relation, par le serveur, des deux dispositifs de traitement, comprend une étape d'envoi, via le réseau de transmission de données, à au moins l'un desdits dispositifs de traitement, d'une notification des capacités de communication de l'autre dispositif de traitement de données,
- la communication téléphonique et la communication de données ont lieu simultanément,
- la communication téléphonique et la communication de données ont lieu alternativement,
- le déclenchement de la communication de données est effectué en activant une interface de communication du dispositif de traitement de données,
- une proposition du déclenchement de la communication de données est notifiée par le serveur à au moins l'un des utilisateurs sous la forme d'un message que ce dernier reçoit sur son dispositif de traitement,
- les données à communiquer sont choisies dans le groupe comprenant en particulier les données multimédia, les messages électroniques, les fichiers informatiques.

La présente invention concerne également un système pour la mise en oeuvre du procédé de communication de données selon l'invention.

Un tel système est caractérisé en ce qu'il comprend :
- au moins un dispositif d'écoute de ligne téléphonique pour écouter la ligne téléphonique qui relie l'appareil téléphonique d'un des utilisateurs au réseau de télécommunications, ce dispositif étant apte à envoyer au dispositif de traitement de données dudit utilisateur des informations relatives à l'activité ou l'inactivité de ladite ligne téléphonique,
- un serveur connecté au moins au dispositif de traitement de données dudit utilisateur via le réseau de transmission de données, ce serveur comprenant d'une part des moyens d'enregistrement d'informations relatives au moins au dispositif de traitement de données dudit utilisateur, et, d'autre part, des moyens de communication pour communiquer avec ledit dispositif de traitement de données via le réseau de transmission de données, lesdits moyens de communication étant aptes, lorsqu'ils reçoivent une requête qui contient le numéro de téléphone de l'autre utilisateur, à autoriser le déclenchement d'une communication de données entre les deux utilisateurs via le réseau de transmission de données, à condition que les informations relatives au dispositif de traitement de données de l'autre utilisateur soit contenues dans les moyens d'enregistrement dudit serveur.

Dans des modes de réalisation préférés du système selon l'invention, on a recours à l'une et/ou à l'autre des dispositions suivantes :
- le dispositif d'écoute de ligne téléphonique est un dispositif d'adaptation de signaux électriques se propageant sur ladite ligne téléphonique, cet adaptateur étant relié à un driver du dispositif de traitement de données, par l'intermédiaire d'une entrée de ligne ou de micro de ce dernier,
- le dispositif d'écoute de ligne téléphonique est un dispositif de traitement des informations relatives à l'activité ou l'inactivité de ladite ligne téléphonique, ce dispositif de traitement étant relié à une interface numérique du dispositif de traitement de données,
- ladite ligne téléphonique est du type analogique et chaque appareil téléphonique est du type à touches musicales,
- les moyens d'enregistrement comprennent des informations sur l'état de chaque dispositif de traitement, le type d'état étant fonction de l'information relative à l'activité ou l'inactivité de la ligne téléphonique.

D'autres caractéristiques et avantages de l'invention apparaîtront au cours de la description suivante d'un mode de réalisation, donné à titre d'exemple non limitatif, en regard des dessins annexés.

Sur les dessins :
- la figure 1 représente l'architecture du système de communication de données selon la présente invention,
- la figure 2 représente un diagramme d'état d'un procédé de communications de données mis en oeuvre dans le système de la figure 1.

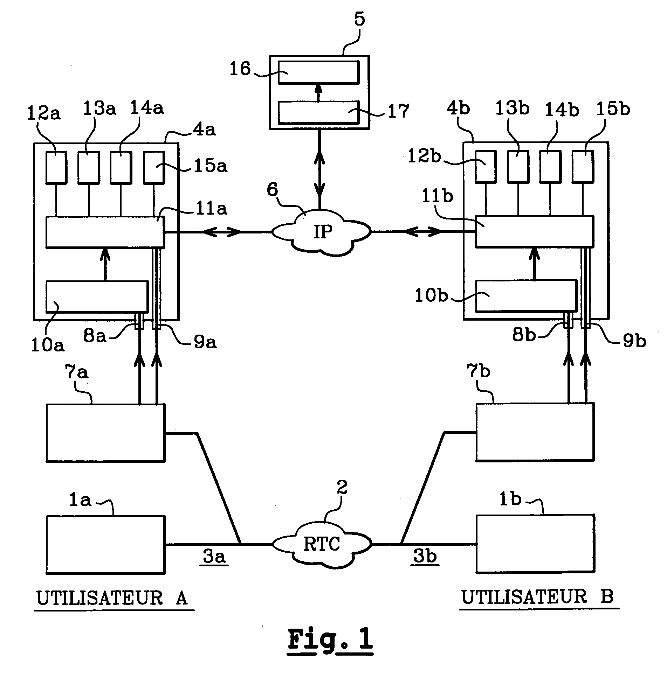

Comme on peut le voir sur la figure 1, le système comprend:
- un appareil téléphonique 1a appartenant à un utilisateur A du système,
- un appareil téléphonique 1b appartenant à un utilisateur B du système,
- un réseau de télécommunications 2 auquel sont reliés les appareils téléphoniques 1a et 1b, respectivement par des lignes téléphoniques 3a et 3b.

Dans l'exemple représenté:
- les appareils téléphoniques 1a, 1b sont du type à touches musicales, à savoir qu'ils sont capables d'émettre des fréquences DTMF (Dual Tone Multi Frequency) dans le but d'envoyer, sous forme codée, le numéro de téléphone appelé à un commutateur (non représenté) du réseau 2,
- les lignes téléphoniques 3a, 3b sont de type analogique,
- le réseau de télécommunications 2 est le réseau téléphonique commuté RTC.

Le système comprend en outre:
- un dispositif de traitement de données 4a appartenant à l'utilisateur A,
- un dispositif de traitement de données 4b appartenant à l'utilisateur B,
- un serveur 5,
- un réseau de transmission de données 6 auquel sont reliés les dispositifs de traitement de données 4a, 4b et le serveur 5.

Dans l'exemple représenté, les dispositifs de traitement de données 4a, 4b sont des ordinateurs personnels (PC) et le réseau 6 est du type Internet. Un tel réseau est susceptible d'utiliser différents protocoles de communication tels qu'en particulier IP, ATM, X25, etc...

A titre de variante, le réseau 6 est du type local (Intranet par exemple).

A titre de variantes, les dispositifs de traitement de données 4a, 4b sont tous deux des terminaux numériques de type set-top-box, des consoles de jeux ou similaires.

Le système comprend enfin :
- un dispositif 7a d'écoute de la ligne téléphonique 3a, le dispositif 7a étant relié entre l'ordinateur personnel 4a et la ligne téléphonique 3a,
- un dispositif 7b d'écoute de la ligne téléphonique 3b, le dispositif 7b étant relié entre l'ordinateur personnel 4b et la ligne téléphonique 3b.

Plus précisément, de tels dispositifs 7a, 7b sont destinés, de façon connue en tant que telle, à s'activer dès le décrochage ou le raccrochage des lignes téléphoniques 3a, 3b respectives.

Selon un premier mode de réalisation, le dispositif d'écoute de ligne 7a (respectivement 7b) consiste en un simple dispositif d'adaptation de ligne, dont la seule fonction est d'adapter les signaux électriques se propageant sur la ligne téléphonique 3a (respectivement 3b), afin de les injecter sur une entrée de ligne ou de micro 8a (respectivement 8b) de l'ordinateur personnel 4a (respectivement 4b).

Selon un second mode de réalisation, le dispositif d'écoute de ligne 7a (respectivement 7b) est en outre capable, par rapport au premier mode de réalisation, de traiter certaines informations sur la ligne téléphonique 3a (respectivement 3b). Le dispositif d'écoute de ligne 7a (respectivement 7b) a notamment la possibilité de traiter des fréquences émises sur la ligne téléphonique 3a (respectivement 3b) de façon à repérer celles correspondantes aux signaux DTMF de numérotation téléphonique effectuée par l'un des utilisateurs A, B du système. Suite à cette opération, le dispositif d'écoute de ligne 7a (respectivement 7b) convertit les fréquences DTMF repérées en valeurs numériques qu'il remonte en blocs ou une par une sur une interface numérique 9a (respectivement 9b) de l'ordinateur personnel 4a (respectivement 4b).

L'interface numérique 9a ou 9b est par exemple un port série RS232 ou un port USB.

Dans le cas où le dispositif d'écoute de ligne 7a (respectivement 7b) est conforme au premier mode de réalisation, un driver 10a (respectivement 10b) est en outre associé à l'entrée de ligne ou de micro 8a (respectivement 8b). Ce driver 10a (respectivement 10b) est destiné à piloter une carte son (non représentée) dans le but d'acquérir les signaux électriques qui sont délivrés par l'entrée de ligne ou de micro 8a (respectivement 8b).

Les signaux électriques délivrés par l'entrée de ligne ou de micro 8a sont alors échantillonnés et traités pour détecter:
- l'activité ou l'inactivité de la ligne téléphonique 3a (respectivement 3b), c'est à dire son décrochage ou son raccrochage,
- les fréquences DTMF envoyées sur la ligne téléphonique 3a (respectivement 3b),
- les tonalités d'invitation à numéroter,
- les tonalités de sonnerie,
- les tonalités d'occupation.

Le driver 10a (respectivement 10b) est relié à des moyens de traitement et d'échange d'informations 11a (respectivement 11b) qui sont, dans l'exemple représenté, un microprocesseur programmé de façon à émettre, dès que l'ordinateur personnel 4a (respectivement 4b) se connecte au réseau Internet 6, une requête en direction du serveur 5, via le réseau Internet 6, ladite requête contenant :
- des données relatives à l'identification du microprocesseur telles que notamment le numéro de téléphone associé à la ligne téléphonique 3a ou 3b qui est décrochée,
- des données relatives à l'accès du microprocesseur 11a (respectivement 11b) par le serveur 5, telles que notamment l'adresse sur le réseau Internet 6 de l'ordinateur personnel 4a (respectivement 4b), ainsi que le numéro de port d'écoute réseau de ce dernier,
- des données relatives aux capacités de l'ordinateur personnel 4a ou 4b qui comprend le microprocesseur 11a (respectivement 11b), telles qu'en particulier les capacités à communiquer des données multimédia via le réseau Internet 6 selon par exemple le protocole SIP (Session Initiation Protocol) ou H.323, à traiter des messages de type électroniques ou instantanés, à transférer des fichiers informatiques, etc...

Le microprocesseur 11a (respectivement 11b) est par ailleurs programmé de façon à émettre, dès que l'appareil téléphonique 1a (respectivement 1b) se déconnecte du réseau téléphonique 2, une requête en direction du serveur 5, via le réseau Internet 6, ladite requête demandant au serveur 5 d'effacer les données ci-dessus.

Une telle information de déconnexion est remontée vers le microprocesseur 11a (respectivement 11b) par le dispositif d'écoute de ligne 7a (respectivement 7b):
- soit via l'entrée de ligne ou de micro 8a (respectivement 8b) et le driver 10a (respectivement 10b), si le dispositif d'écoute de ligne est conforme au premier mode de réalisation,
- soit via l'interface numérique 9a (respectivement 9b), si le dispositif d'écoute de ligne est conforme au second mode de réalisation.

De telles capacités sont mises en oeuvre par des applications logicielles qui sont matérialisées sur l'ordinateur personnel 4a (respectivement 4b) par des boutons de commande qui, dans l'exemple représenté, sont au nombre de quatre et désignés par les signes de référence 12a, 13a, 14a, 15a (respectivement 12b, 13b, 14b, 15b).

Le bouton de commande 12a (respectivement 12b) est intitulé par exemple: "messagerie électronique". Ainsi, en cliquant sur ce bouton, l'utilisateur A (respectivement B) a la possibilité, par le biais d'un menu qui s'affiche à l'écran, d'envoyer à l'utilisateur B (respectivement A) des messages de type électronique, de consulter sa messagerie ou autres.

Le bouton de commande 13a (respectivement 13b) est intitulé par exemple: "messagerie instantanée". Ainsi, en cliquant sur ce bouton, l'utilisateur A (respectivement B) a la possibilité, par le biais d'un menu qui s'affiche à l'écran, d'envoyer à l'utilisateur B (respectivement A) des messages de type instantané, de consulter sa messagerie, ou autres.

Le bouton de commande 14a (respectivement 14b) est intitulé par exemple: "transfert multimédia ". Ainsi, en cliquant sur ce bouton, l'utilisateur A (respectivement B) a la possibilité, par le biais d'un menu qui s'affiche à l'écran, notamment d'envoyer à l'utilisateur B (respectivement A) des fichiers sons, des photographies, des séquences vidéos (film), des séquences interactives, etc...

Le bouton de commande 15a (respectivement 15b) est intitulé par exemple: "transfert fichiers informatiques ". Ainsi, en cliquant sur ce bouton, l'utilisateur A (respectivement B) a la possibilité, par le biais d'un menu qui s'affiche à l'écran, notamment d'envoyer à l'utilisateur B (respectivement A) des fichiers texte, des tableaux, des dessins, etc...

Le microprocesseur 11a (respectivement 11b) est en outre programmé pour recevoir en provenance du driver 10a (respectivement 10b) les signaux électriques traités et échantillonnés dans ce dernier. Suite à la réception de ces signaux, le microprocesseur 11a (respectivement 11b) émet en direction du serveur 5, via le réseau Internet 6, une requête d'information sur l'état de la ligne téléphonique 3a (respectivement 3b). Plus précisément:
- si la réception de valeurs numériques correspond au décrochage d'une ligne téléphonique, par exemple la ligne 3a, le microprocesseur 11a émet en direction du serveur 5 une requête d'indication d'activité de l'appareil téléphonique 1a,
- si la réception de valeurs numériques correspond à la composition, par l'utilisateur A, du numéro de téléphone de l'utilisateur B, le microprocesseur 11a émet, en direction du serveur 5, une requête d'indication dudit numéro de téléphone,
- si la réception de valeurs numériques correspond au raccrochage d'une ligne téléphonique, par exemple la ligne 3a, le microprocesseur 11a émet en direction du serveur 5 une requête d'indication d'inactivité de cette ligne.

Le microprocesseur 11a (respectivement 11b) est également programmé pour recevoir en provenance du serveur 5, en réponse à l'émission des requêtes d'indication d'activité ou de numéro de téléphone de l'appareil téléphonique 1a ou 1b, des informations relatives aux capacités de communication de l'utilisateur B (respectivement de l'utilisateur A) qui ont été mentionnées ci-dessus. De telles informations contiennent en particulier les adresses, sur le réseau Internet 6, qui correspondent respectivement aux applications de communication commandées par les boutons 12b à 15b (respectivement 12a à 15a).

Suite à la réception des informations fournies par le serveur 5, le microprocesseur 11a (respectivement 11b) paramètre les applications de communication de l'ordinateur personnel 4a (respectivement 4b). Ainsi, l'utilisateur A (respectivement B) a la possibilité, via le réseau Internet 6, de communiquer immédiatement des données à l'utilisateur B (respectivement A), sans avoir besoin de demander l'adresse de ce dernier qui correspond à l'application de communication choisie. Le déclenchement d'une telle communication de données a alors lieu automatiquement.

A titre d'alternative, une proposition du déclenchement d'une telle communication est notifiée à l'utilisateur A (respectivement B) sous la forme d'une fenêtre d'alerte qui s'affiche à l'écran, d'un signal sonore ou encore d'une modification d'interface par ajout/suppression d'un bouton de commande ou d'un menu.

Le serveur 5 comprend une base de données 16 qui est reliée à une interface 17 de communication avec l'ordinateur personnel 4a et/ou 4b, via le réseau Internet 6.

La base de données 16 est destinée à stocker, pour chaque ordinateur personnel 4a, 4b:
- les données relatives à l'identification du microprocesseur 11a, 11b,
- les données relatives à l'accès du microprocesseur 11a, 11b,
- les données relatives aux capacités de communication de l'ordinateur personnel 4b, 4a,
- et l'état dans lequel se trouve l'ordinateur personnel 4a et/ou 4b.

Les cinq types d'état suivants sont répertoriés:
- l'état actif non couplé lorsque l'interface de communication 17 reçoit du microprocesseur 11a et/ou 11b une requête d'indication d'activité de l'appareil téléphonique 1a et/ou 1b,
- l'état actif couplé lorsque l'interface de communication 17 reçoit du microprocesseur 11a et/ou 11b une requête d'indication du numéro de téléphone correspondant à l'appareil téléphonique 1a et/ou 1b,
- l'état inactif lorsque l'interface de communication 17 reçoit du microprocesseur 11a et/ou 11b une requête d'indication d'inactivité de ligne.

La base de données 16 comporte en outre une table de correspondance entre, d'une part, le numéro de téléphone de l'appareil téléphonique 1a ou 1b appelant, et, d'autre part, les trois types de données d'identification relatives à l'ordinateur personnel 4a ou 4b appelé.

De cette façon, lorsque l'interface de communication 17 reçoit une requête d'indication d'activité de l'appareil téléphonique 1a et/ou 1b ou une requête d'indication du numéro de téléphone correspondant à l'appareil téléphonique 1a et/ou 1b, l'interface de communication 17 procède à une requête dans la base de données 16 pour savoir si l'ordinateur personnel 4a ou 4b associé à l'appareil téléphonique 1a ou 1b appelant peut être couplé à l'ordinateur personnel 4b ou 4a associé à l'appareil téléphonique 1b ou 1a appelé.

Si un tel couplage peut exister, c'est à dire si les ordinateurs personnels 4a, 4b ont été correctement enregistrés auprès du serveur 5, l'interface de communication 17 met en relation les ordinateurs personnels 4a et 4b au bout d'un temps prédéterminé paramétré dans le serveur 5.

A cet effet, l'interface de communication 17 émet en direction d'au moins l'un des ordinateurs personnels, par exemple l'ordinateur personnel 4a, si c'est l'utilisateur A qui a initié la communication, un message contenant les données relatives aux capacités de communication de l'ordinateur personnel 4b associé à l'appareil téléphonique 1b appelé.

Selon une alternative, l'interface de communication 17 émet également en direction de l'ordinateur 4b un message contenant les données relatives aux capacités de communication de l'ordinateur personnel 4a associé à l'appareil téléphonique 1a appelant.

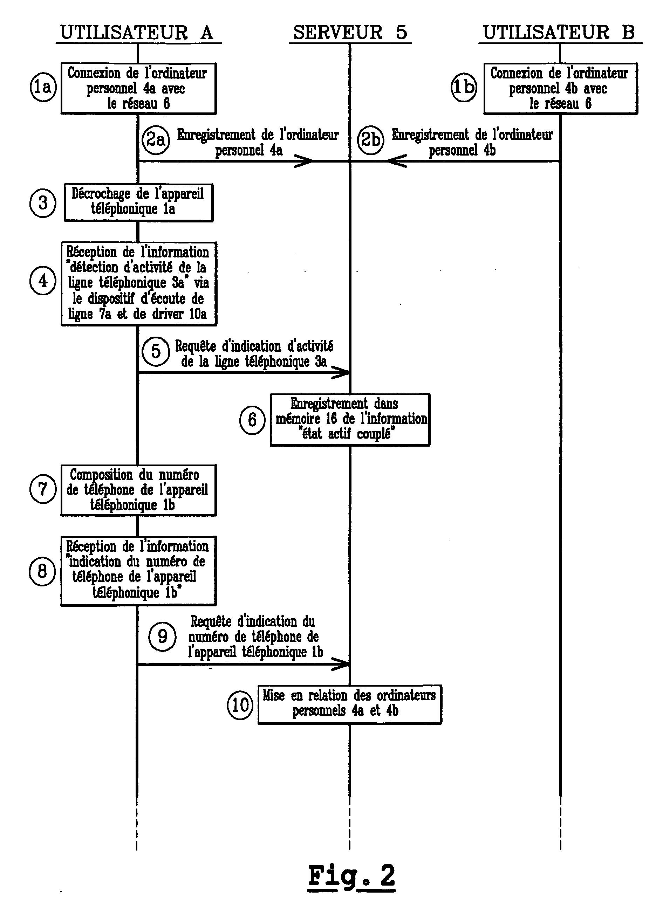

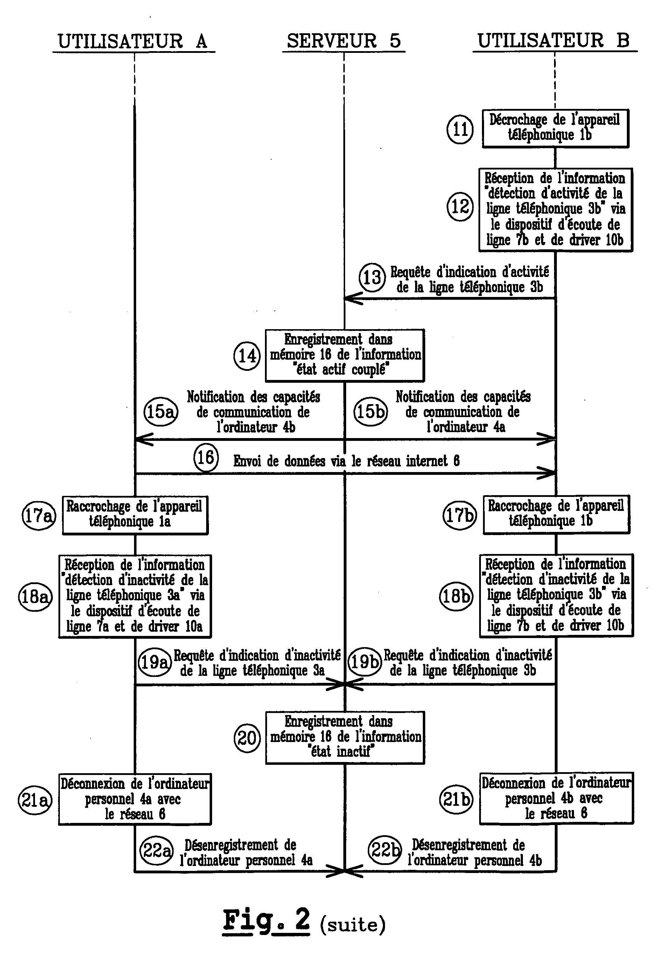

On va maintenant décrire, en référence aux figures 1 et 2, le fonctionnement du système de communication de données selon l'invention.

Dans un premier temps, l'utilisateur A connecte son ordinateur personnel 4a au réseau Internet 6 (étape 1a).

Le microprocesseur 11a émet alors en direction de l'interface de communication 17 une requête d'enregistrement de l'ordinateur personnel 4a auprès du serveur 5 (étape 2a), ladite requête comprenant :
- l'adresse de l'ordinateur personnel 4a sur le réseau Internet 6,
- le numéro de port d'écoute réseau de ce dernier,
- et les adresses, sur le réseau Internet 6, qui correspondent respectivement aux applications de communication commandées par les boutons 12a à 15a.

Parallèlement, l'utilisateur B connecte son ordinateur personnel 4b au réseau Internet 6 (étape 1b).

Le microprocesseur 11b émet alors en direction de l'interface de communication 17 une requête d'enregistrement de l'ordinateur personnel 4b auprès du serveur 5 (étape 2b), ladite requête comprenant :
- l'adresse de l'ordinateur personnel 4b sur le réseau Internet 6,
- le numéro de port d'écoute réseau de ce dernier,
- et les adresses, sur le réseau Internet 6, qui correspondent respectivement aux applications de communication commandées par les boutons 12b à 15b.

L'utilisateur A décroche son appareil téléphonique 1a en vue de contacter l'utilisateur B (étape 3).

Le dispositif d'écoute de ligne 7a, qui est, dans l'exemple représenté, conforme au premier mode de réalisation décrit ci-dessus, adapte les signaux électriques détectés sur la ligne téléphonique 3a et les envoie en direction du driver 10a via l'entrée de ligne ou de micro 8a.

Le driver 10a échantillonne ces signaux et les convertit en valeurs numériques. Ces valeurs numériques sont ensuite envoyées au microprocesseur 11a qui les interprète comme une information de détection d'activité de la ligne téléphonique 3a (étape 4).

Le microprocesseur 11a envoie alors en direction de l'interface de communication 17 une requête d'indication d'activité de la ligne téléphonique 3a (étape 5).

Suite à la réception de cette requête, l'interface de communication 17 enregistre dans la base de données 16 l'information "état actif non couplé" relative à l'ordinateur personnel 4a (étape 6).

L'utilisateur A compose ensuite le numéro de téléphone de l'appareil téléphonique 1b de l'utilisateur B (étape 7).

Le dispositif d'écoute de ligne 7a repère les signaux DTMF de numérotation téléphonique effectuée par l'utilisateur A et les convertit en valeurs numériques qu'il remonte en blocs ou une par une vers le driver 10a, via l'entrée de ligne ou de micro 8a de l'ordinateur personnel 4a.

Le driver 10a transmet ces valeurs numériques au microprocesseur 11a qui les interprète comme une information d'indication du numéro de téléphone correspondant à l'appareil téléphonique 1b (étape 8).

Le microprocesseur 11a envoie alors en direction de l'interface de communication 17 une requête d'indication du numéro de téléphone correspondant à l'appareil téléphonique 1b (étape 9).

Suite à la réception de cette requête, l'interface de communication 17 procède à une requête dans la base de données 16 pour savoir si l'ordinateur personnel 4a associé à l'appareil téléphonique 1a appelant peut être couplé à l'ordinateur personnel 4b associé à l'appareil téléphonique 1b.

Les deux ordinateurs personnels 4a, 4b étant tous deux enregistrés auprès du serveur 5, l'interface de communication 17 met en relation les ordinateurs personnels 4a et 4b comme décrit ci-dessus (étape 10).

Suite à la composition du numéro de téléphone de l'appareil téléphonique 1b par l'utilisateur A, l'utilisateur B décroche son appareil téléphonique 1b (étape 11).

Le dispositif d'écoute de ligne 7b adapte les signaux électriques détectés sur la ligne téléphonique 3b et les envoie en direction du driver 10b via l'entrée de ligne ou de micro 8b.

Le driver 10b échantillonne ces signaux et les convertit en valeurs numériques. Ces valeurs numériques sont ensuite envoyées au microprocesseur 11b qui les interprète comme une information de détection d'activité de la ligne téléphonique 3b (étape 12).

Le microprocesseur 11b envoie alors en direction de l'interface de communication 17 une requête d'indication d'activité de la ligne téléphonique 3b (étape 13).

Suite à la réception de cette requête, l'interface de communication 17 enregistre dans la base de données 16 l'information "état actif couplé" relative à l'ordinateur personnel 4b (étape 14).

L'interface de communication 17 émet alors un message en direction du microprocesseur 11a, ledit message contenant les données relatives aux capacités de communication de l'ordinateur personnel 4b, de même qu'un message en direction du microprocesseur 11b, ledit message contenant les données relatives aux capacités de communication de l'ordinateur personnel 4a (étapes 15a et 15b).

Au cours de la conversation téléphonique de l'utilisateur A avec l'utilisateur B, l'utilisateur A propose d'envoyer des données à l'utilisateur B via le réseau Internet 6, telles que par exemple un fichier multimédia.

L'utilisateur A clique alors sur le bouton de commande14a intitulé : "transfert multimédia " pour lancer l'envoi du fichier multimédia (étape 16).

Les utilisateurs A et B peuvent avantageusement continuer la conversation téléphonique tout en consultant sur leur ordinateur respectif les données du fichier image.

Lorsque les utilisateurs A et B ne souhaite plus communiquer, ils raccrochent leur appareil téléphonique 1a et 1b respectif (étapes 18a et 18b).

Le dispositif d'écoute de ligne 7a (respectivement 7b) adapte les signaux électriques correspondant au raccrochage qui sont détectés sur la ligne téléphonique 3a (respectivement 3b) et les envoie en direction du driver 10a (respectivement 10b) via l'entrée de ligne ou de micro 8a (respectivement 8b).

Le driver 10a (respectivement 10b) échantillonne ces signaux et les convertit en valeurs numériques. Ces valeurs numériques sont ensuite envoyées au microprocesseur 11a (respectivement 11b) qui les interprète comme une information de détection d'inactivité de la ligne téléphonique 3a (respectivement 3b) (étapes 18a et 18b).

Le microprocesseur 11a (respectivement 11b) envoie alors en direction de l'interface de communication 17 une requête d'indication d'inactivité de la ligne téléphonique 3a (respectivement 3b) (étape 19a et 19b).

Suite à la réception de cette requête, l'interface de communication 17 enregistre dans la base de données 16 l'information "état inactif " relative aux ordinateurs personnels 4a et 4b (étape 20).

Les utilisateurs A et B déconnectent alors leur ordinateur personnel respectif du réseau Internet 6 (étapes 21a et 21b).

Le microprocesseur 11a (respectivement 11b) émet alors en direction de l'interface de communication 17 une requête de désenregistrement de l'ordinateur personnel 4a (respectivement 4b) auprès du serveur 5 (étape 22a et 22b).

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Dans le procédé de communication de données décrit ci-dessus, la communication téléphonique, au lieu d'être poursuivie en parallèle avec la communication de données, pourrait être, par exemple, interrompue suite à l'envoi du fichier image, les utilisateurs poursuivant la communication uniquement via le réseau Internet 6.

S'agissant des étapes d'enregistrement 2a, 2b et de désenregistrement 22a, 22b auprès du serveur 5, ces dernières pourraient être soit facultatives, soit réalisées dès que le microprocesseur 11a ou 11b est activé.

Dans le premier cas, il convient de programmer l'interface de communication 17 pour que cette dernière envoie, en direction des microprocesseurs 11a et/ou 11b, des requêtes de mise à jour de la base de données 16, notamment en cas d'ajout d'applications de communications dans l'ordinateur personnel 4a et/ou 4b ou encore de changement d'adresse sur le réseau Internet 6, etc...

Dans le second cas, il est fait en sorte que le serveur 5 comprenne une base de données qui stocke les informations communiquées lors des étapes d'enregistrement et de désenregistrement. Ainsi, chaque requête ultérieure reçue par l'interface de communication 17 sera traitée en fonction des informations d'enregistrement ou de désenregistrement stockées en dernier lieu dans la base de données.

## Revendications

1. Procédé de communication de données entre au moins deux utilisateurs munis chacun, d'une part, d'un appareil téléphonique (1a, 1b) relié à un réseau de télécommunications (2), et, d'autre part, d'un dispositif de traitement de données (4a, 4b) relié à un réseau de transmission de données (6),
ledit procédé étant **caractérisé en ce qu'**il comprend au moins les étapes suivantes:
- l'un des utilisateurs compose sur son appareil téléphonique (1a) le numéro de téléphone de l'autre utilisateur, pour communication via le réseau de télécommunications (2),
- le dispositif de traitement de données (4a) de l'utilisateur qui a composé le numéro de téléphone envoie une requête d'indication d'activité de l'appareil téléphonique (1a) dudit utilisateur à un serveur (5), lequel est relié au réseau de transmission de données (6) et comprend des moyens d'enregistrement (16) d'informations relatives aux deux dispositifs de traitement de données,
- une fois que la communication téléphonique est établie et en fonction des informations relatives aux deux dispositifs de traitement de données qui sont contenues dans les moyens d'enregistrement (16), le serveur 5 met en relation les deux dispositifs de traitement de données de telle sorte que au moins l'un des utilisateurs soit susceptible de déclencher une communication de données avec l'autre utilisateur par l'intermédiaire du réseau de transmission de données (6).

2. Procédé selon la revendication 1, dans lequel les informations relatives au dispositif de traitement de données (4b) de l'autre utilisateur sont enregistrées préalablement à l'initiation de la communication téléphonique.

3. Procédé selon la revendication 2, dans lequel lesdites informations comprennent, pour chaque dispositif de traitement (4a, 4b), des données d'identification, d'accès, et de capacités de communication, via le réseau de transmission de données (6).

4. Procédé selon la revendication 1, dans lequel la mise en relation, par le serveur (5), des deux dispositifs de traitement (4a, 4b), comprend une étape d'envoi, via le réseau de transmission de données (6), à au moins l'un desdits dispositifs de traitement, d'une notification des capacités de communication de l'autre dispositif de traitement de données.

5. Procédé selon l'une quelconque des revendications 1 à 4, dans lequel la communication téléphonique et la communication de données ont lieu simultanément.

6. Procédé selon l'une quelconque des revendications 1 à 4, dans lequel la communication téléphonique et la communication de données ont lieu alternativement.

7. Procédé selon l'une quelconque des revendications 1 à 6, dans lequel le déclenchement de la communication de données est effectué en activant une interface de communication (12a-15a, 12b-15b) du dispositif de traitement de données (4a, 4b).

8. Procédé selon l'une quelconque des revendications 1 à 7, dans lequel une proposition du déclenchement de la communication de données est notifiée par le serveur (5) à au moins l'un des utilisateurs sous la forme d'un message que ce dernier reçoit sur son dispositif de traitement (4a, 4b).

9. Procédé selon l'une quelconque des revendications 1 à 8, dans lequel les données à communiquer sont choisies dans le groupe comprenant en particulier les données multimédia, les messages électroniques, les fichiers informatiques.

10. Système pour la mise en oeuvre du procédé selon l'une quelconque des revendications 1 à 9,
ledit système étant **caractérisé en ce que :**
il comprend :
- au moins un dispositif d'écoute de ligne téléphonique (7a) pour écouter la ligne téléphonique (3a) qui relie l'appareil téléphonique (1a) d'un des utilisateurs au réseau de télécommunications (2), ce dispositif étant apte à envoyer au dispositif de traitement de données (4a) dudit utilisateur des informations relatives à l'activité ou l'inactivité de ladite ligne téléphonique,
- un serveur (5) connecté au moins au dispositif de traitement de données (4a) dudit utilisateur via le réseau de transmission de données (6), ce serveur comprenant d'une part des moyens d'enregistrement (16) d'informations relatives au moins au dispositif de traitement de données (4a) dudit utilisateur, et, d'autre part, des moyens de communication (17) pour communiquer avec ledit dispositif de traitement de données (4a) via le réseau de transmission de données (6), lesdits moyens de communication étant aptes, lorsqu'ils reçoivent une requête qui contient le numéro de téléphone de l'autre utilisateur, à autoriser le déclenchement d'une communication de données entre les deux utilisateurs via le réseau de transmission de données (6), à condition que les informations relatives au dispositif de traitement de données (4b) de l'autre utilisateur soit contenues dans les moyens d'enregistrement (16) dudit serveur.

11. Système selon la revendication 10, dans lequel le dispositif d'écoute de ligne téléphonique (7a) est un dispositif d'adaptation de signaux électriques se propageant sur ladite ligne téléphonique (3a), cet adaptateur étant relié à un driver (10a) du dispositif de traitement de données (4a), par l'intermédiaire d'une entrée de ligne ou de micro (8a) de ce dernier.

12. Système selon la revendication 10, dans lequel le dispositif d'écoute de ligne téléphonique (7a) est un dispositif de traitement des informations relatives à l'activité ou l'inactivité de ladite ligne téléphonique (3a), ce dispositif de traitement étant relié à une interface numérique (9a) du dispositif de traitement de données (4a).

13. Système selon l'une quelconque des revendications 10 à 12, dans lequel ladite ligne téléphonique est du type analogique et chaque appareil téléphonique est du type à touches musicales.

14. Système selon l'une quelconque des revendications 10 à 13, dans lequel les moyens d'enregistrement (16) comprennent des informations sur l'état de chaque dispositif de traitement (4a, 4b), le type d'état étant fonction de l'information relative à l'activité ou l'inactivité de la ligne téléphonique (3a, 3b).
